# EUROPEAN PATENT SPECIFICATION

(11) **EP 3 015 806 B1**
(45) Date of publication and mention of the grant of the patent: **24.08.2022**
(21) Application number: 15191523.8
(22) Date of filing: 26.10.2015
(51) Int. Cl.: F28D 1/00, H02K 9/10, H02K 9/19, H02K 9/20

(54) **TWO-PHASE ELECTRIC MOTOR COOLER**
ZWEIPHASIGER ELEKTROMOTORKÜHLER
REFROIDISSEUR DE MOTEUR ÉLECTRIQUE À DEUX PHASES

(30) Priority: 27.10.2014 US 201414524019
(43) Date of publication of application: 04.05.2016
(73) Proprietor: Hamilton Sundstrand Corporation, Charlotte, NC 28217 (US)
(72) Inventor: PAL, Debabrata, Hoffman Estates, IL Illinois 60195 (US); LEGROS, Craig R., Rockford, IL Illinois 61109 (US)
(74) Representative: Dehns

(56) References cited:
- WO-A1-01/05017
- WO-A2-2014/084989
- US-A- 4 238 701
- US-A1- 2009 206 687

## Description

### BACKGROUND

### 1. Field

The present disclosure relates to electric motors, more specifically to thermal management of electric motors.

### 2. Description of Related Art

Certain aircraft employ electric motors for compressing cabin air and/or for other uses. Traditionally, such electric motors are cooled by passing ram air through cooling channels defined in the back iron of the electric motors. Due to changing atmospheric conditions (e.g., air temperature, humidity), especially on hot and humid days, ram air cooling efficiency is reduced and the motor cannot be cooled sufficiently.

Such conventional methods and systems have generally been considered satisfactory for their intended purpose. However, there is still a need in the art for electric motor heat transfer systems that allow for greater heat transfer control and efficiency. The present disclosure provides a solution for this need.

WO 2014/084989 relates to a method for cooling a compressor motor. US 4238701 relates to operating a generator in its superconducting state. WO 01/05017 relates to electrical power generators.

### SUMMARY

An electric motor system according to the invention is defined in claim 1.

The cooling mixture can include a mixture having about 10% to about 70% liquid or any other suitable mixture. The liquid coolant can include water and/or any other suitable liquid coolant. The cooling mixture can include air and/or any other suitable gas coolant.

In some embodiments, the system can further comprise a condenser in fluid communication with the fluid outlet and the fluid inlet to form a closed loop system. In other embodiments, the fluid inlet and the fluid outlet are not in fluid communication such that the system is an open loop system.

The system can further include a fluid mixer configured to mix air and the liquid coolant upstream of the fluid inlet to create the cooling mixture. The fluid mixer can include a liquid sprayer to spray liquid particles of the liquid coolant into the air such that the cooling mixture includes liquid particles dispersed therein when it enters the fluid inlet.

The fluid inlet is defined in the motor housing and includes a plurality of introducers for spraying the cooling mixture into the back iron heat exchanger.

A method for cooling an electric motor system can include introducing a liquid coolant into a back iron heat exchanger of the electric motor, allowing the liquid coolant to convert to a gas coolant within the back iron heat exchanger of the electric motor for absorbing additional thermal energy due to the phase change of the liquid coolant to a gas phase, and exhausting the gas coolant from the back iron heat exchanger through a fluid outlet in fluid communication with the back iron heat exchanger.

Introducing the liquid coolant can include introducing a mixture of air and the liquid coolant. The method can further include reconverting the gas coolant back to a liquid coolant at a condenser. The method can further include releasing the gas coolant from the electric motor system.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described by way of example only and in detail herein below with reference to certain figures, wherein:
Fig. 1 is a schematic illustration of an embodiment of a close loop cooled electric motor system in accordance with this disclosure, showing a liquid coolant introduction system; and
Fig. 2 is a schematic illustration of an embodiment of an open loop cooled electric motor system in accordance with this disclosure, showing a liquid coolant and air mixer disposed in fluid communication with a fluid inlet of the electric motor system.

### DETAILED DESCRIPTION

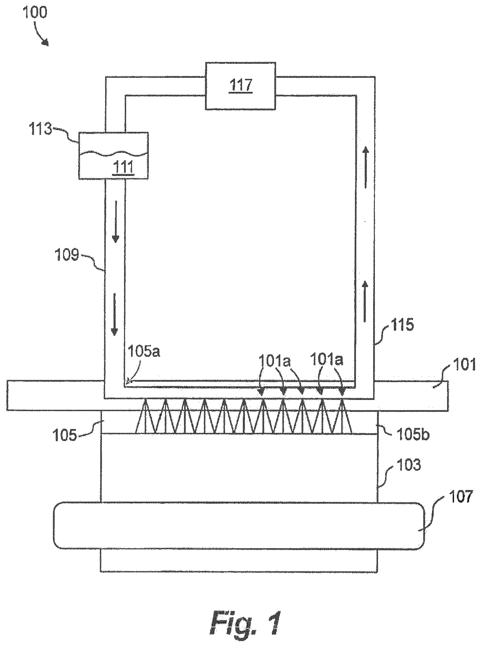

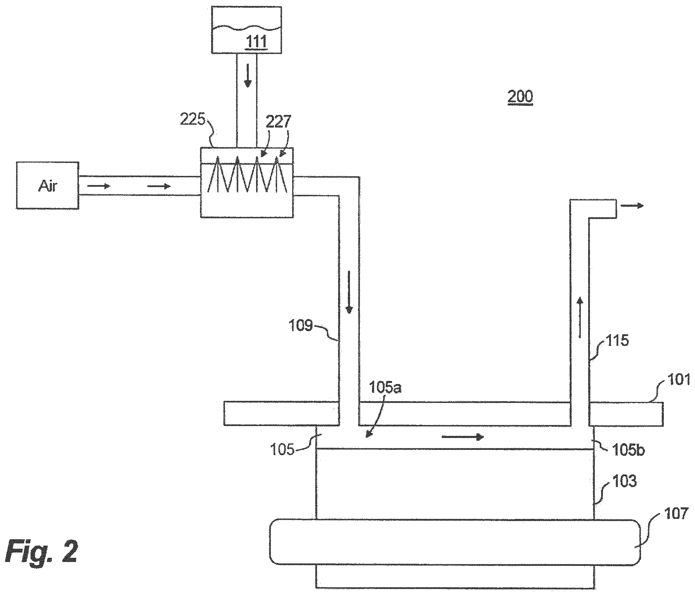

Reference will now be made to the drawings wherein like reference numerals identify similar structural features or aspects of the subject disclosure. For purposes of explanation and illustration, and not limitation, an illustrative view of an embodiment of an electric motor system in accordance with the disclosure is shown in Fig. 1 and is designated generally by reference character 100. Another embodiment of an electric motor system is shown in Fig. 2 and is generally designated reference character 200. The systems and methods described herein can be used to enhance cooling of electric motors/generators compared to traditional systems.

Referring to Fig. 1, in at least one aspect of this disclosure, an electric motor system 100 includes a motor housing 101, a stator core 103 disposed within the motor housing 101 and including a back iron heat exchanger 105 for passing fluid therethrough. While the heat exchanger 105 is referred to as a "back iron" heat exchanger, this term of art is defined herein as any suitable heat exchanger made of any suitable material (e.g., aluminum), not simply iron. One or more stator windings 107 can be disposed within the stator core 103.

A fluid inlet 109 is disposed at a first portion 105a of the back iron heat exchanger 105 and is at least partially in fluid communication with a liquid coolant 111 from a coolant source 113. The fluid inlet 109 and is configured to accept a cooling mixture to allow the liquid coolant 111 or a mixture of the liquid coolant 111 and a gas (e.g., air) to enter into the back iron heat exchanger 105.

As shown in Fig. 1, the liquid coolant 111 is fed to the inlet 109 in a liquid state such that the cooling mixture introduced into the back iron heat exchanger 105 is liquid. However, it is contemplated that the embodiment of Fig. 1 can be configured to operate with any suitable mixture of liquid and gas coolant.

In some embodiments, as shown in Fig. 1, the fluid inlet 109 is defined in the motor housing 101 and includes a plurality of introducers 101a for spraying the cooling mixture into the back iron heat exchanger 105.

The system 100 further includes a fluid outlet 115 disposed at a second portion 105b of the back iron heat exchanger 105 for accepting a gas (e.g., liquid coolant 111 that has been converted to gas) from the back iron heat exchanger 105 such that the liquid coolant 111 can be converted to gas in the back iron heat exchanger 105 by receiving energy from the stator core 103 allowing the gas to exit through the outlet 115 and thereby removing heat from the stator core 103.

As shown in Fig. 1, the system 100 can be a closed loop system such that a liquid portion of the at least partially liquid coolant is recycled within the system 100 using a condenser 117 fluidly connecting the fluid outlet 115 to the fluid inlet 109 and/or to the coolant source 113. In such an embodiment, gas coolant flowing through the outlet 115 can be routed to a suitable condenser 117 (e.g., a power electronics cooling system (PECS) heat exchanger) for removal of heat from the gas coolant and conversion back into the liquid coolant 111.

In other embodiments, as shown in Fig. 2, a system 200 can be an open loop such that the gas coolant is discharged from the system 200 through the fluid outlet 105. As shown, the system 200 can further include a fluid mixer 225 configured to mix air and the liquid coolant 111 ahead of the fluid inlet 109 to create a partially liquid cooling mixture. The fluid mixer 225 can include a liquid sprayer 227 to spray liquid particles of the liquid coolant 111 into the air such that the partially liquid cooling mixture includes liquid particles dispersed therein when it enters the fluid inlet 109.

The cooling mixture can be more than about 50% liquid or any other suitable mixture by volume (e.g., less than about 50%, less than about 10%, about 100%, about 75%). In some embodiments, the cooling mixture includes about 10% to about 70% liquid. The ratio of liquid coolant 111 to air or other gas can be controlled to achieve a desired specific heat and/or thermal transfer due to the latent heat of evaporation. For example, the cooling mixture can be saturated with the liquid coolant to ensure that all liquid coolant 111 converts to gas inside the back iron heat exchanger 105. The system 200 can include a feedback system for determining how much liquid coolant 111 to add to the air flow in the mixer 225 based on any suitable characteristic (stator core temperature, outflow gas properties, temperature, or the like).

The liquid coolant 111 can include water and/or any other suitable liquid coolant (e.g., a refrigerant). Any suitable gas coolant (e.g., air as shown) can be mixed with the liquid coolant in the mixer 225.

In accordance with at least one aspect of this disclosure, a method for cooling an electric motor system 200 can include introducing a liquid coolant 111 into a back iron heat exchanger 105 of the electric motor, allowing the liquid coolant 111 to convert to a gas coolant within the back iron heat exchanger 105 of the electric motor for absorbing additional thermal energy due to the phase transfer of the liquid coolant 111 to a gas phase, and exhausting the gas coolant from the back iron heat exchanger 105 through a fluid outlet 115 in fluid communication with the back iron heat exchanger 105.

Introducing the liquid coolant 111 can include introducing a mixture of air and the liquid coolant 111. The method can further include reconverting the gas coolant back to a liquid coolant 111 at a condenser (e.g., condenser 117 as shown in Fig. 1). The method can further include releasing the gas coolant from the electric motor system 200.

The methods and systems of the present disclosure, as described above and shown in the drawings, provide for cooling systems for electric motors/generators with superior properties including improved thermal transfer efficiency. While the apparatus and methods of the subject disclosure have been shown and described with reference to embodiments, those skilled in the art will readily appreciate that changes and/or modifications may be made thereto without departing from the scope of the invention as defined by the appended claims.

## Claims

1. An electric motor system (100), comprising:
a motor housing (101);
a stator core (103) disposed within the motor housing (101) and including a back iron heat exchanger (105) configured to pass fluid therethrough;
a fluid inlet (109) disposed at a first portion (105a) of the back iron heat exchanger (105) that is at least partially in fluid communication with a liquid coolant source (113) and is configured to accept a cooling mixture;
a fluid outlet (115) disposed at a second portion (105b) of the back iron heat exchanger (105) configured to outlet a gas coolant from the back iron heat exchanger (105) such that liquid coolant is convertible to the gas coolant in the back iron heat exchanger (105) by receiving energy from the stator core (103) allowing the gas coolant exit through the outlet (115) and thereby removing heat from the stator core (103); wherein
the fluid inlet (109) is defined in the motor housing (101) and **characterized in that** the fluid inlet (109) includes a plurality of introducers for spraying the cooling mixture into the back iron heat exchanger (105)

2. The system of any preceding claim, wherein the liquid coolant includes water.

3. The system of any preceding claim, further comprising a condenser (117) in fluid communication with the fluid outlet (115) and the fluid inlet (109) to form a closed loop system.

4. The system of any preceding claim, wherein the fluid inlet (109) and the fluid outlet (115) are not in fluid communication such that the system is an open loop system.

5. A method for cooling an electric motor system (100), comprising:
introducing a liquid coolant into a back iron heat exchanger (105) of the electric motor;
converting the liquid coolant to a gas coolant within the back iron heat exchanger (105) of the electric motor for absorbing additional thermal energy due to the phase transfer of the liquid coolant to a gas phase;
exhausting the gas coolant from the back iron heat exchanger (105) through a fluid outlet (115) in fluid communication with the back iron heat exchanger (105); and
wherein introducing a liquid coolant includes spraying a liquid coolant into the back iron heat exchanger (105).

6. The method of claim 5, wherein introducing the liquid coolant includes introducing a mixture of air and the liquid coolant.

7. The method of claims 5 or 6, further comprising reconverting the gas coolant back to a liquid coolant at a condenser (117).

8. The method of claims 5, 6 or 7, further comprising releasing the gas coolant from the electric motor system.

## Patentansprüche

1. Elektromotorsystem (100), umfassend:
ein Motorgehäuse (101);
einen Statorkern (103), der in dem Motorgehäuse (101) angeordnet ist und einen Eisenrückschluss-Wärmetauscher (105) beinhaltet, der dazu konfiguriert ist, dass Fluid durch ihn geleitet wird;
einen Fluideinlass (109), der an einem ersten Abschnitt (105a) des Eisenrückschluss-Wärmetauschers (105) angeordnet ist und zumindest teilweise in Fluidverbindung mit einer Quelle (113) für flüssiges Kühlmittel steht und dazu konfiguriert ist, ein Kühlgemisch aufzunehmen,
einen Fluidauslass (115), der an einem zweiten Abschnitt (105b) des Eisenrückschluss-Wärmetauschers (105) angeordnet ist und dazu konfiguriert ist, ein gasförmiges Kühlmittel aus dem Eisenrückschluss-Wärmetauscher (105) auszulassen, sodass flüssiges Kühlmittel in dem Eisenrückschluss-Wärmetauscher (105) in das gasförmige Kühlmittel umwandelbar ist, indem es Energie von dem Statorkern (103) aufnimmt, wodurch ermöglicht wird, dass das gasförmige Kühlmittel durch den Auslass (115) austritt, und wodurch Wärme von dem Statorkern (103) entfernt wird; wobei
der Fluideinlass (109) in dem Motorgehäuse (101) definiert ist und **dadurch gekennzeichnet ist, dass** der Fluideinlass (109) eine Vielzahl von Einführvorrichtungen zum Sprühen des Kühlgemisches in den Eisenrückschluss-Wärmetauscher (105) beinhaltet.

2. System nach dem vorhergehenden Anspruch, wobei das flüssige Kühlmittel Wasser beinhaltet.

3. System nach einem der vorhergehenden Ansprüche, ferner umfassend einen Kondensator (117), der in Fluidverbindung mit dem Fluidauslass (115) und dem Fluideinlass (109) steht, um ein System mit geschlossenem Kreislauf zu bilden.

4. System nach einem der vorhergehenden Ansprüche, wobei der Fluideinlass (109) und der Fluidauslass (115) nicht in Fluidverbindung stehen, sodass das System ein System mit offenem Kreislauf ist.

5. Verfahren zum Kühlen eines Elektromotorsystems (100), umfassend:
Einführen eines flüssigen Kühlmittels in einen Eisenrückschluss-Wärmetauscher (105) des Elektromotors;
Umwandeln des flüssigen Kühlmittels in ein gasförmiges Kühlmittel in dem Eisenrückschluss-Wärmetauscher (105) des Elektromotors zum Absorbieren zusätzlicher thermischer Energie aufgrund des Phasenübergangs des flüssigen Kühlmittels in eine Gasphase;
Ablassen des gasförmigen Kühlmittels aus dem Eisenrückschluss-Wärmetauscher (105) durch einen Fluidauslass (115), der in Fluidverbindung mit dem Eisenrückschluss-Wärmetauscher (105) steht; und
wobei das Einführen eines flüssigen Kühlmittels Sprühen eines flüssigen Kühlmittels in den Eisenrückschluss-Wärmetauscher (105) beinhaltet.

6. Verfahren nach Anspruch 5, wobei das Einführen des flüssigen Kühlmittels Einführen eines Gemisches aus Luft und dem flüssigen Kühlmittel beinhaltet.

7. Verfahren nach Anspruch 5 oder 6, ferner umfassend Rückumwandeln des gasförmigen Kühlmittels zurück in ein flüssiges Kühlmittel an einem Kondensator (117).

8. Verfahren nach Anspruch 5, 6 oder 7, ferner umfassend Freisetzen des gasförmigen Kühlmittels aus dem Elektromotorsystem.

## Revendications

1. Système de moteur électrique (100), comprenant :
un carter de moteur (101) ;
un noyau de stator (103) disposé à l'intérieur du carter de moteur (101) et comportant un échangeur de chaleur à contre-fer (105) configuré pour faire passer un fluide à travers celui-ci ;
une entrée de fluide (109) disposée au niveau d'une première partie (105a) de l'échangeur de chaleur à contre-fer (105) qui est au moins partiellement en communication fluidique avec une source de réfrigérant liquide (113) et est configurée pour accepter un mélange de refroidissement,
une sortie de fluide (115) disposée au niveau d'une seconde partie (105b) de l'échangeur de chaleur à contre-fer (105) configurée pour faire sortir un réfrigérant gazeux de l'échangeur de chaleur à contre-fer (105) de sorte que le réfrigérant liquide est convertible en réfrigérant gazeux dans l'échangeur de chaleur à contre-fer (105) en recevant de l'énergie du noyau de stator (103) permettant au réfrigérant gazeux de sortir par la sortie (115) et en éliminant ainsi la chaleur du noyau de stator (103) ; dans lequel
l'entrée de fluide (109) est définie dans le carter de moteur (101) et **caractérisé en ce que** l'entrée de fluide (109) comporte une pluralité d'introducteurs pour pulvériser le mélange de refroidissement dans l'échangeur de chaleur à contre-fer (105).

2. Système selon une quelconque revendication précédente, dans lequel le réfrigérant liquide comporte de l'eau.

3. Système selon une quelconque revendication précédente, comprenant en outre un condenseur (117) en communication fluidique avec la sortie de fluide (115) et l'entrée de fluide (109) pour former un système en boucle fermée.

4. Système selon l'une quelconque des revendications précédentes, dans lequel l'entrée de fluide (109) et la sortie de fluide (115) ne sont pas en communication fluidique de sorte que le système est un système à boucle ouverte.

5. Procédé de refroidissement d'un système de moteur électrique (100), comprenant :
l'introduction d'un réfrigérant liquide dans un échangeur de chaleur à contre-fer (105) du moteur électrique ;
la conversion du réfrigérant liquide en un réfrigérant gazeux à l'intérieur de l'échangeur de chaleur à contre-fer (105) du moteur électrique pour absorber l'énergie thermique supplémentaire due au transfert de phase du réfrigérant liquide en une phase gazeuse ;
l'évacuation du réfrigérant gazeux de l'échangeur de chaleur à contre-fer (105) à travers une sortie de fluide (115) en communication fluidique avec l'échangeur de chaleur à contre-fer (105) ; et
dans lequel l'introduction d'un rérigérant liquide comprend la pulvérisation d'un réfrigérant liquide dans l'échangeur de chaleur à contre-fer (105).

6. Procédé selon la revendication 5, dans lequel l'introduction du réfrigérant liquide comprend l'introduction d'un mélange d'air et du réfrigérant liquide.

7. Procédé selon les revendications 5 ou 6, comprenant en outre la reconversion du réfrigérant gazeux en un réfrigérant liquide au niveau d'un condenseur (117).

8. Procédé selon les revendications 5, 6 ou 7, comprenant en outre la libération du réfrigérant gazeux du système de moteur électrique.
